# EUROPÄISCHE PATENTSCHRIFT

(11) **EP 3 759 324 B1**
(45) Veröffentlichungstag und Bekanntmachung des Hinweises auf die Patenterteilung: **08.02.2023**
(21) Anmeldenummer: 19709415.4
(22) Anmeldetag: 28.02.2019
(51) Int. Cl.: F01N 3/20, F01N 13/14, H05B 6/02, H05B 6/10, H05B 6/36

(54) **VORRICHTUNG ZUR THERMISCHEN UND/ODER AKUSTISCHEN ABSCHIRMUNG EINES ANTRIEBSSTRANGS ODER EINES BESTANDTEILS DAVON**
DEVICE FOR THERMALLY AND/OR ACOUSTICALLY SHIELDING A DRIVETRAIN OR PART THEREOF
DISPOSITIF POUR LA PROTECTION THERMIQUE ET/OU ACOUSTIQUE D'UN GROUPE MOTOPROPULSEUR OU D'UN COMPOSANT DE CELUI-CI

(30) Priorität: 28.02.2018 DE 102018104601
(43) Veröffentlichungstag der Anmeldung: 06.01.2021
(73) Patentinhaber: ElringKlinger AG, 72581 Dettingen/Erms (DE)
(72) Erfinder: WILSCH, Kristina, 72581 Dettingen/Erms (DE); BOLD, Marcel, 72581 Dettingen/Erms (DE); HUBERT, Andreas, 72581 Dettingen/Erms (DE)
(74) Vertreter: Schmidt, Axel
(86) Internationale Anmeldenummer: PCT/EP2019/055057
(87) Internationale Veröffentlichungsnummer: WO 2019/166584

(56) Entgegenhaltungen:
- EP-A2- 0 332 609
- EP-A2- 2 784 283
- US-A- 3 886 739
- US-A- 5 569 455
- US-A1- 2017 218 816

## Beschreibung

Die vorliegende Erfindung betrifft eine Vorrichtung zur thermischen und/oder akustischen Abschirmung eines Antriebsstrangs oder eines Bestandteils davon sowie dessen Verwendung.

Aus dem Stand der Technik sind diverse Ansätze zur Ausbildung von Vorrichtungen der genannten Art bekannt, durch die ein Antriebsstrang oder ein Bestandteil davon thermisch und/oder akustisch gegenüber der angrenzenden Umgebung abgeschirmt werden. Dazu wird eine bekannte Vorrichtung als Abschirmteil au-βen auf ein bestimmtes Teil des Antriebsstranges gelegt oder um das Teil herum geschlossen. Durch bekannte Vorrichtungen kann ein entsprechend abgedeckter Teil des Antriebsstranges gegenüber der angrenzenden Umwelt abgeschirmt und so auch vor einem Auskühlen durch äußere Einflüsse in Grenzen geschützt werden. Gegen eine zu geringe Temperatur des abgedeckten Teils des Antriebsstranges kann eine bekannte Vorrichtung hingegen nicht schützen.

Die vorliegende Erfindung hat das Ziel hier Abhilfe in Form einer Vorrichtung der genannten Art zu schaffen, die zudem in ein bestehendes System preiswert integrierbar ist.

Diese Aufgabe wird erfindungsgemäß durch die Merkmale von Anspruch 1 dadurch gelöst, dass mindestens ein Element zum induktiven Beheizen eines Antriebsstrangs oder eines Bestandteils davon in der Vorrichtung integriert oder eingebettet vorgesehen ist, wobei das mindestens eine Element durch eine metallische Reflexionsschicht und/oder eine ferromagnetische EMV-Abschirmung auf einer dem zu beheizenden Antriebsstrang oder einem Bestandteil davon abgewandten Seite abgeschirmt ist. Damit ist es durch eine erfindungsgemäße Vorrichtung möglich, dass ein Heizsystem an einem Antriebsstrang beispielsweise einer Verbrennungskraftmaschine oder einem Bestandteil davon vorgesehen werden kann. Der technische Hintergrund für die Notwendigkeit eines Beheizens einer Verbrennungskraftmaschine oder mindestens eines sonstigen Bestandteils des Antriebsstranges davon liegt darin begründet, dass insbesondere bei einem Kaltstart auch unter günstigen Umgebungsbedingungen von z.B. +20 °C erst bestimmte Betriebstemperaturen in den genannten Komponenten erreicht werden müssen, um einen zuverlässigen Betrieb gewährleisten zu können. Das gilt insbesondere für den Bereich der Abgasnachbehandlung zur Einhaltung von Abgasgrenzwerten. Hier müssen Katalysatoren erst auf eine bauartspezifische Betriebstemperatur gebracht werden, bevor eine ausreichende Reduzierung von Schadstoffen in einem Abgasstrom durch die Abgasnachbehandlung erreichbar ist. Um dieses Zeitfenster einer unzureichenden Abgasnachbehandlung so klein wie möglich zu halten, ist ein aktives, elektrisches Beheizen von Komponenten innerhalb eines Fahrzeuges bekannt, um bestimmte Bauteile vorzuheizen oder sie schneller auf Betriebstemperatur zu bringen und hierdurch beispielsweise die vorstehend angedeuteten Kaltstartemissionen in Abgasstrang zu reduzieren. Auch wenn in Hybrid- oder Elektrofahrzeuge ein Abgasstrang im herkömmlichen Sinn fehlen kann, so gelten die vorstehenden Forderungen in angepasster Weise auch auf alternative Antriebskonzepte unter Nutzung von Brennstoffzellen und/oder Ackumulatoren als Massenspeicher für elektrische Energie.

Es gibt neben dem Einsatz von zusätzlich in einem Katalysator zum schnellen Aufheizen verbrannten Kraftstoffs unterschiedlichste Arten von Heizsystemen, welche i.d.R. als ohmsche Widerstandsheizungen angewendet werden.

Zum Beheizen diverser Elemente im Fahrzeug gibt es aktuell je nach Anwendung unterschiedliche Lösungen. So offenbart die EP 783 621 B1 einen elektrisch beheizbaren Wabenkörper als Bestandteil eines Katalysators. Auch die WO 2015/040396 A1 offenbart eine elektrisch beheizbare Wabenstruktur als Bestandteil eines Katalysators, der nachgeschaltet einen weiteren Wabenkörper mit anderer Zusammensetzung aufweist. In ähnlicher Weise sieht auch die US 2002/0092298 A1 einen als Wabenstruktur ausgebildeten Heizleiter elektrisch isoliert über einem stromabwärts folgenden eigentlichen Katalysator vor.

Die DE 10 2015 111 689 B3 offenbart einen elektrisch beheizbaren Katalysator und ein Verfahren zu dessen Herstellung, wobei hier die Erzeugung einer bestimmten Wärmeverteilung durch eine entsprechende Ausgestaltung der Heizung in Form eines komplett in eine Isolierung eingebetteten Heizleiters.

Neben den Abgassystemen gibt es auch bei den Batterien eine optimale Betriebstemperatur. Ist die Temperatur zu gering kann die Batterien nicht optimal geladen werden bzw. ist das zu betreibende System bekommt bei zu geringen Betriebstemperaturen nicht genügend Spannung.

Die EP 0 588 004 A1 beschreibt beispielsweise eine elektrische Speicherbatterie, insbesondere für einen Fahrzeugantrieb. Um den optimale Betriebstemperatur von ca. 300 °C zu erreichen ist neben einem Kühlsystem und einer entsprechenden Isolierung auch ein Beheizen der Batterie unter bestimmten Umständen erforderlich.

Die DE 10 2010 032 088 A1 beschreibt Verfahren zum Beheizen eines Batteriesystems mit wenigstens zwei Batterien oder Batterieabschnitten, wobei die Beheizung des Batteriesystems durch das abwechselnde Laden und Entladen des Batteriesystems mit einem Wechselstrom erfolgt.

Die DE 10 2009 005 853 A1 betrifft ein Batteriesystem, das wenigsten ein Peltierelement umfasst, welches der Kühlung und / oder der Erwärmung mindestens einer Batterie dient. Dabei liegen optimale Temperaturen für bekannte Batteriesysteme bei ca. 20° bis 40°C.

Neben den Batteriesystemen ist es auch bei der Brennstoffzellentechnik von Bedeutung, dass je nach Brennstoffzellentyp eine jeweils optimale Betriebstemperatur erreicht wird. Diese Betriebstemperaturen sind je nach Typ über einen weiten Bereich gestreut: für eine Polymerelektrolyt-Brennstoffzelle, kurz PEMFC, werden Betriebstemperaturen von 10° bis 100°C angegeben, wobei für Festoxid-Brennstoffzellen, kurz SOFC, Betriebstemperaturen von 450° bis in einen Hochtemperaturbereich mit ca. 1.000°C angegeben werden. Die DE 19931061 A1 beschreibt eine mögliche Anordnung zum Beheizen oder auch Kühlen einer Brennstoffzelle und Brennstoffzellensystem.

EP 0 332 609 A2 offenbart eine Vorrichtung zur Abscheidung elektrisch geladener Teilchen bzw. Rußpartikel aus einem Abgasstrom unter Nutzung eines senkrecht zu einer Fließrichtung eines Gasstroms stehenden Magnetfeldes. Bei einer derartigen Vorrichtung handelt nicht um eine Vorrichtung zur thermischen und/oder akustischen Abschirmung.

US 2017/0218816 A1 lehrt eine Vorrichtung zur induktiven Erwärmung innerhalb eines Gehäuses eines Katalysators anzuordnen. Auch die Lehre der US 5 569 455 A1 zielt auf eine nur innerhalb eines Gehäuses eines Katalysators angeordnete Vorrichtung zur induktiven Erwärmung eines Bestandteils des Katalysators ab.

Durch die Lehre der US 3 886 739 B wird der Gefahr einer thermischen Schrumpfung eines metallischen Außengehäuses mit der Folge eines Zerquetschens eines weiterhin stark erwärmten und damit ausgedehnten Keramikkörpers eines Katalysators durch eine äußere induktive Beheizung des Außengehäuses begegnet.

EP 2 784 283 A1 beschreibt eine mattenartige Anordnung mit einem Heizleiter, die als Abdichtungs- und Halteelement zwischen einen Katalysator-Körper und ein Außengehäuse eingelegt ist. Auch zur Umsetzung dieser Lehre müsste wiederum in einen inneren Aufbau eines einbaufertigen Katalysator-Bauteils eingegriffen werden.

Die bisher verfügbaren Lösungen sind nicht ohne größeren zusätzlichen Aufwand in ein bestehendes System einfügbar. Durch die genannten Ansätze wird ein Gehäuse insbesondere eines Katalysators geöffnet und der eigentliche Katalysatorträger entweder durch Einbauten modifiziert, oder es werden zusätzliche Bauteile vor-, nach oder herum geschaltet. Auf Grund dessen sind Fertigung, Wartungen und Reparaturen bei Defekten sehr aufwändig. Des Weiteren wird meist durch die verfügbaren Lösungen zusätzlicher Bauraum benötigt, was Möglichkeiten einer Nachrüstung stark einschränkt. Bisherige Lösungen im Bereich der Abgassysteme sind zudem vergleichsweise teuer.

Erfindungsgemäß ist hingegen eine thermische und/oder akustische Abschirmung als bekanntes Bauteil bereits vorhanden, das durch Integration oder Einbettung mindestens eines Elements zum induktiven Beheizen eines in einer Einbaulage daran eng angrenzenden Antriebsstrangs, z.B. einer Verbrennungskraftmaschine oder eines Katalysators als eines Bestandteils davon, lediglich modifiziert und funktional erweitert wird. Ein zusätzlicher Platzbedarf fällt vergleichsweise gering aus, wobei eine jeweilige durch Lage, thermische Auslegung und Größe der Induktionsspulen bestimmbare Heizzone über weite Bereiche des Abschirmteils frei einbaubar ist. Alle Teile und/oder Bereich des Antriebsstrangs selber bleiben hingegen von diesen Änderungen unberührt und unverändert. Aus anderen Bereichen der Technik ist die Verwendung von induktiven Heizsystemen bekannt. Neben dem Einsatz bei Induktionskochfeldern kommt ein Heizen durch Induktion in der industriellen Fertigung auch im Bereich des Schweißens, Glühens, Oberflächenhärtens, Lötens und Schmelzens zum Einsatz. Eine Besonderheit eines erfindungsgemäßen Ansatzes liegt demgegenüber jedoch darin, dass mindestens ein flaches Element zum induktiven Beheizen an oder in einer Abschirmung als einem bereits existierenden Bauteil kombiniert oder integriert vorgesehen ist, wobei durch eine metallische Reflexionsschicht und/oder eine ferromagnetische EMV-Abschirmung auf einer dem zu beheizenden Antriebsstrang oder einem Bestandteil davon abgewandten Seite abgeschirmt ist.

Damit sieht eine erfindungsgemäße Lösung ein aktives elektrisches Beheizen von vorstehend beispielhaft genannten Komponenten innerhalb eines Fahrzeuges mittels eines oder mehrerer induktiver Elemente vor, wobei eine Kombination mit einem bereits existierenden Bauteil zur thermischen und/oder akustischen Abschirmung gebildet wird und an keinem Bestandteil eines Antriebsstrangs Modifikationen vorgenommen werden müssen. Die entsprechend erweiterten Abschirmteile umschließen damit in bekannter Weise weiterhin das zu heizende Bauteil, wobei hier nun die erforderliche Energie von außen in das Abschirmteil eingebracht und eine gezielte Erwärmung mittels Induktion hervorgerufen wird. Durch mindestens eine Induktionsspule als Element des Abschirmteils fließt in bekannter Weise elektrischer Strom aus einer Spannungsquelle derart, dass gezielt Wirbelströme in ein zu erwärmendes Teil und/oder nicht elektrisch gespeiste Spulen zu deren Erwärmung induziert werden. Als Spannungsquelle wird vorzugsweise das Bordnetz herangezogen und hier im Besonderen die gesteigerte Versorgungsspannung, z.B. ein geplantes 48 V Bordnetz, welches in zukünftigen Fahrzeugen als Standard verfügbar sein wird.

Gegenüber aus dem Stand der Technik bekannten Ansätzen sind als Vorteile einer erfindungsgemäßen Lösung u.a. mögliche Gewichtseinsparungen gegenüber bekannten und in oder an Bauteilen eines Antriebsstrangs integrierten Heizsystemen, Kosteneinsparungen, sowie die einfache Nachrüstbarkeit in ein bestehendes System bei ausreichend guter Zugänglichkeit zu nennen.

Vorteilhafte Weiterbildungen sind Gegenstand der Unteransprüche. Demnach ist das mindestens ein Element in einer bevorzugten Ausführungsform der Erfindung als Flächenelement ausgebildet. Durch diese Bauform wird ein zusätzlich benötigter Bauraum minimiert, besonders effektiv bei der Bauform als flacher Spule mit einer im Wesentlichen rechteckigen Form der abgedeckten Fläche.

Vorzugsweise ist das mindestens eine Element an der thermischen und/oder akustischen Abschirmung so angeordnet ist, dass es in einer Einbaulage dem zu erwärmenden Teil des Antriebsstrangs zugewandt angeordnet ist. Damit wird auch ein Abstand zur Verringerung von magnetischen Streuverlusten minimiert.

Alternativ ist ein Element in einer anderen Weiterbildung der Erfindung auch in der thermischen und/oder akustischen Abschirmung eingebettet angeordnet, wie unter Bezugnahme auf Ausführungsbeispiele noch genauer beschrieben wird. Hierdurch wird ein definierter Abstand zwischen dem mindestens einen Element in der thermischen und/oder akustischen Abschirmung und dem zu erwärmenden Bauteil vorgegeben und eingestellt. Das kann für eine dauerhafte und gute elektrische Isolierung genutzt werden.

In einer Weiterbildung der Erfindung sind auch Leitbahnen für eine definierte Stromführung zu und in dem mindestens einen Element in ein das Element tragendes Material oder Dämmmaterial eingearbeitet. Dazu ist es weiterhin vorteilhaft, wenn das Heizsystem eine flächige Struktur umfasst, insbesondere eine Gewebematte, die als tragendes Element mit dem mindestens einen Element ausgerüstet oder bestückt ist. Vorzugsweise sind die Elemente in und/oder auf der Gewebematte mechanisch dauerhaft fixiert.

Vorzugsweise ist diese Vorrichtung als Heizsystem durch die Matte flexibel und/oder dreidimensional verformbar ausgebildet, wobei für die unterschiedlichsten Temperaturbereiche angepasst Materialien zum Aufbau der Matte bei ausreichender elektrischer Isolation vorgesehen sind. Dabei wird insbesondere darauf geachtet, dass in den verwendeten Materialien selber keine Wirbelströme induzierbar sind.

In einer bevorzugten Ausführungsform der Erfindung ist das mindestens eine Element durch eine ferromagnetische Folie oder ein Blech auf einer dem zu beheizenden Bauteil abgewandten Seite abgeschirmt. Diese Abschirmung wirkt dabei insbesondere gegen eine elektromagnetische Abstrahlung des mindestens einen Elements in den umgebenden Außenraum hinein.

Alternativ zu einer Ausführung als Matte werden Elemente zur induktiven Erwärmung auch in einen Träger in Form eines elektrisch nicht leitfähigen Netzes integriert angeordnet. Auf einem dünnen, sehr offenen Netz oder Vlies als Träger werden Elemente beispielsweise in einem Dickschichtverfahren in definierter Weise gedruckt. Eine solche Anordnung wird in einem getrennten Schritt der Vorfertigung hergestellt, dann in einer Schichtung mit den Teilen der Abschirmung verbunden und gemeinsam verformt sowie ausgehärtet. Im Weiteren kann dieser Träger z.B. aus Glasfasern bestehen und als thermisches, akustisches und elektrisches Isolationsmaterial wirken.

Eine vorteilhafte Verwendung eines beschriebenen Heizsystems sind Einsatzfälle zum starken und zielgerichteten Beheizen eines Batteriesystems, einer Brennstoffzelle oder von Teilen alternativer Antriebssysteme z.B. an Kraftfahrzeugen, die ein bestimmtes Temperatur-Mindestniveau für einen bestimmungsgemä-βen Betrieb haben und induktiv erwärmbar ausgerüstet sind.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine perspektivische Ansicht einer Ausführungsform mit Integration eines Heizsystems in einem Abschirmteil für eine Direktisolierung;
- Figur 2:: eine Ausführungsform mit Integration eines Heizsystems in ein mehrlagiges Abschirmteil in einer Ansicht analog Figur 1 und
- Figur 3:: eine perspektivische Ansicht einer um eine magnetische Abschirmung erweiterten Ausführungsform eines um ein Rohr eines Abgassystems geschlossenen Abschirmteils.

Über die verschiedenen Abbildungen hinweg werden für gleiche Elemente stets die gleichen Bezugszeichen verwendet.

Eine erfindungsgemäße Erweiterung eines Abschirmteils mit der Zusatzfunktionalität der induktiven Beheizbarkeit durch ein Heizsystem ist grundsätzlich nicht auf eine spezielle Anwendung begrenzt. Die Integration dieser Art einer Heizung in das Abschirmteil kann in unterschiedlichster Form vorgenommen werden. Beispielsweise kann sie in ein Abschirmteil, welches zur sog. Direktisolierung eingesetzt wird, integriert werden. Dort ist das Element aktiv elektrisch gespeist oder zur Erwärmung mit einem Antriebsstrang oder eines Bestandteils davon elektromagnetisch gekoppelt. Hierdurch kann beispielsweise eine auf dem Einsatz eines Katalysators basierende Abgasreinigung früher wirken und dementsprechend sowohl bei Otto- als auch Dieselmotoren die Emissionen als auch der Kraftstoffverbrauch und damit auch die CO₂ Emission z.B. eines Kraftfahrzeugs reduziert werden. Des Weiteren ist aber auch denkbar, das Heizsystem in ein mehrlagiges Abschirmteil zu integrieren. Ohne dass darauf hier im Detail mit Abbildungen weiter eingegangen wird muss darauf hingewiesen werden, dass eine derartige Beheizbarkeit auch in Antriebssträngen unter Verwendung von Brennstoffzellen oder Akkumulatoren Abschirmteile in unterschiedlichen Temperaturbereichen einsetzbar sind, die nun durch die Kombination mit einem Heizsystem eine besondere Zusatzfunktionalität erhalten. Dazu wird ein nachfolgend beschriebenes Abschirmteil mit erweiterter Funktionalität mit dem betreffenden Abschnitt eines Antriebsstrangs in Kontakt gebracht.

Das Heizsystem kann nicht nur für unterschiedliche Temperaturbereiche vorgesehen sein, sondern auch in unterschiedlichster Raumform ausgeführt und weitgehend beliebig dreidimensional verformt werden. Daher werden nachfolgend nur zwei grundsätzlich unterschiedliche Aufbauformen als Anordnungen für die Integration eines Heizsystems in ein Abschirmteil in stark vergrößerten Ausschnitten dargestellt und beschrieben, ohne auch auf die Bauform des eigentlichen Hitzeschildes oder die Art des zu erwärmenden Antriebsstrangs oder eines Bestandteils davon weiter einzugehen.

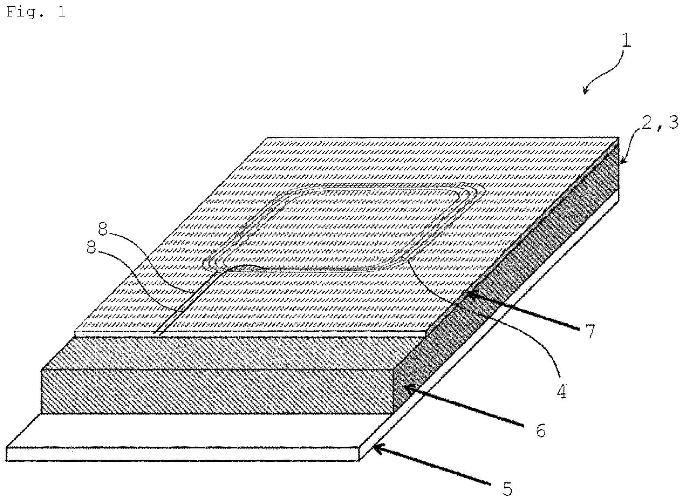

In der Abbildung von Figur 1 ist exemplarisch ein schematischer Aufbau einer Vorrichtung 1 mit Integration eines Heizsystems 2 in ein existierendes Bauteil 3 dargestellt. Das Bauteil 3 ist in bevorzugten Ausführungsformen der Erfindung ein thermisch und/oder akustisch wirksames Abschirmteil, das hier für eine Direktisolierung einer nicht weiter dargestellten Verbrennungskraftmaschine oder eines Bestandteils abgebildet ist, insbesondere eines Katalysators in einem Abgastrakt der Verbrennungskraftmaschine an einen Krümmer anschließend. Betriebstemperaturen von Katalysatoren liegen i.d.R. im Bereich unterhalb von 900°C bis ca. 1.000°C, so dass ein jeweiliger Temperaturbereich eines Regelbetriebs auch nach einem Kaltstart der Verbrennungskraftmaschine durch Verwendung der skizzierten Vorrichtung 1 so schnell als möglich erreicht werden kann, um die bestmögliche Funktionalität des Katalysators zu gewährleisten.

Das thermische Abschirmteil 3 trägt als Heizsystem 2 ein Element 4 in Form einer Flachspule, die in einer Einbaulage einem zu beheizenden Teil direkt benachbart in oberflächlichem Kontakt angeordnet ist. Dem entgegengesetzt nach außen hin weist das Abschirmteil 3 eine metallische Reflexionsschicht 5 auf, die aufgrund ihres hohen Reflexionsgrades gegen Wärmestrahlung und durch eine besondere Oberflächenstruktur auch akustisch aktiv wirksam ist. Zwischen der Reflexionsschicht 5 und der Flachspule 4 ist eine thermische Dämmungslage 6 vorgesehen, die ihrerseits eine flächige Struktur 7 trägt. Diese flächige Struktur 7 beinhaltet ihrerseits eine flächige Versorgung des Elements 4 in Form von elektrischen Zu- und Ableitungen 8 einer flächigen Spule 4 und trägt auch die Spule 4 selbst. Auch elektromagnetisch gekoppelte Elemente 4 ohne eigene Speisung können auf der Dämmungslage 6 als weitere zusätzliche Wärmequellen dienen. Auch hierin rufen induzierte Ströme durch ohmsche Verluste eine Erwärmung im Sinne der Erfindung hervor. In einer Einbaulage ist diese flächige Struktur 7 zu dem aufzuheizenden Teil oder Bereich einer Verbrennungskraftmaschine oder eines Bestandteils davon als Direktisolierung direkt angrenzend angeordnet, bei ausreichender elektrischer Isolation möglichst sogar in direktem Oberflächenkontakt.

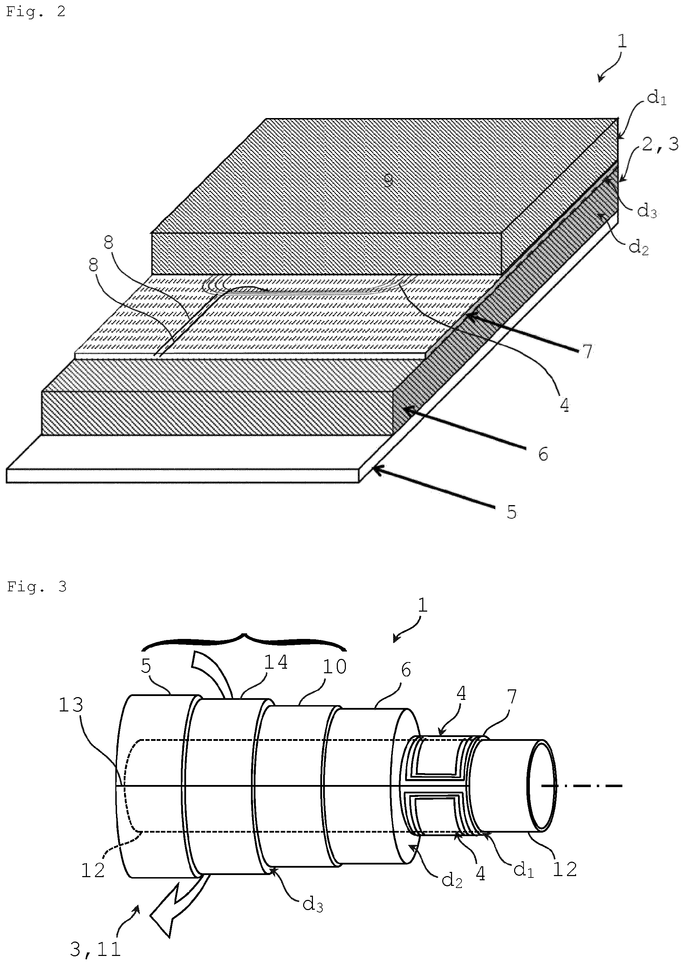

In dem Ausführungsbeispiel von Figur 2 ist ein schematischer Aufbau für die mögliche Integration des Heizsystems 2 in einem mehrlagigen Abschirmteil 3 abgebildet. Gegenüber dem Ausführungsbeispiel von Figur 1 ist das Ausführungsbeispiel gemäß Figur 2 bei nur geringfügig geänderten geometrischen Verhältnissen um eine zusätzliche dämmende Läge 9 erweitert, die die flächige Struktur 7 mit mehreren induktiven Elementen 4 bzw. planaren Spulen nun abdeckt und so eine Verbundstruktur bzw. einen Multilayer bildet.

Die flächige Struktur 7 ist elektrisch isolierend ausgeführt. Als Gewebematte mit darin angeordneten und elektrisch verbundenen Elementen 4 mit Zuleitungen ist sie flexibel und verformbar ausgebildet, so dass weiterhin alle schon heute gebräuchlichen dreidimensionalen Formen von thermischen und/oder akustischen Abschirmteilen mit der zusätzlichen Funktionalität einer Beheizbarkeit eines angrenzenden Antriebsstrang oder eines Bestandteils davon hergestellt werden können.

Auch in der Ausführungsform gemäß Figur 2 ist die Matte 7 als Träger der induktiven Elemente 4 nicht zwingend notwendig. Die induktiven Elemente 4 werden in einem nicht weiter zeichnerisch dargestellten Ausführungsbeispiel in einem DickschichtVerfahren direkt auf die thermische Dämmungslage 6 aufgebracht und über entsprechende Leitungen zu äußeren Anschlüssen verbunden.

Ein Einbetten von Induktionsspulen 4 in die Matte 7 ist aber dann besonders vorteilhaft, wobei die Matte aus elektrisch isolierendem Material als Träger für einen Transfer der in einem Vorbereitungsschritt hergestellten Elemente 4 auf die thermische Dämmungslage 6 dient. Eine gemeinsame Verformung des skizzierten Schichtaufbaus unter thermische Verfestigung unter Nutzung einer Suspension gemäß der Lehre der DE 10 2015 121 397 A1 ist möglich.

Statt einer hier dargestellten sog. Direktisolierung mit nur einer Metalllage kann dem Multilayer-Aufbau nach Fig. 2 noch eine zweite Metalllage über der dämmenden Lage 9 hinzugefügt werden. Die Metalllagen werden regelmäßig aus Blechen oder stärkeren Metallfolien aus Aluminium herstellt. Dieses Metall weist durch ein vergleichsweise geringes Gewicht, gute Formbarkeit bei ausreichender mechanischer Dauerbeanspruchbarkeit und hohes Reflexionsvermögen gegenüber thermischer Strahlung eine Reihe bekannter Vorteile gegenüber anderen Materialien auf. Da Aluminium zudem auch nicht ferromagnetisch ist, wird eine Metalllage aus Aluminium von den im Rahmen der vorliegenden Erfindung zur gezielten Erwärmung genutzten magnetischen Feldern ohne Schwächung durchdringen.

Figur 3 zeigt eine perspektivische Ansicht einer um eine magnetische Abschirmung 10 erweiterten Ausführungsform der Vorrichtung 1. Hier ist diese Vorrichtung 1 nach Art einer einteiligen Manschette 11 als Beispiel für ein dreidimensionales Formteil ausgebildet. Mit nicht weiter dargestellten elektrischen Anschlussleitungen 8 zur Versorgung der angedeuteten Flachspulen 4 in der elektrisch isolierenden Struktur 7 ist die Manschette 11 um ein Rohr 12 eines nicht weiter dargestellten Abgassystems geschlossen. Eine Verteilung der Flachspulen 4 ist hier unter geringen Abständen in einem regelmäßigen Muster angedeutet. Das ist aber den jeweiligen Anforderungen entsprechend frei wählbar, so dass insbesondere vor einem Katalysator Heizzonen mit Flachspulen 4 vorgesehen sein können, und direkt anschließend im selben Abschirmteil keine Flachspulen 4 vorgesehen sind.

Das geradlinig verlaufende Rohr 12 weist hier nur beispielhaft einen kreisförmigen Querschnitt auf, da eine Manschette 11 z.B. auch an rechteck-förmige Querschnitte und weitgehend beliebige räumliche Verläufe anpassbar ist. Durch die Bauform als Manschette 11 ergibt sich in dem dargestellten Einbauzustand nur eine zu schließende dünne Naht 13, die außen in der metallischen Reflexionsschicht 5 erkennbar ist. Neben einer Verklebung ist hier auch eine Verklammerung oder eine überdeckende Nietverbindung ausführbar.

Die Mächtigkeiten bzw. Dicken d₁, d₂, da der Schichten 7, 6 und 14 sind in Abstimmung auf die thermischen Eigenschaften der jeweils verwendeten Materialien mit unterschiedlicher thermischer Dämmfähigkeit erkennbar unterschiedlich gewählt worden. Hiermit sollen dem Fachmann weitere Einstellparameter beim Entwurf einer derartigen Manschette 11 aufgezeigt werden.

Die EMV-Abschirmung 10 liegt auf der thermischen Dämmungslage 6 aus Vlies. Sie ist als ferromagnetische Folie ausgebildet und ist hier als sehr dünnes Eisenblech ausgeführt, das durch eine zusätzliche Dämmungslage 14 von der metallischen Reflexionsschicht 5 getrennt ist. Sofern eine Erwärmung am Außenbereich einer Manschette 11 oder einer sonstigen Ausführungsform einer Vorrichtung 1 in einem Anwendungsfall zulässig ist, kann die EMV-Abschirmung 10 mit der metallischen Reflexionsschicht 5 unter Fortfall der zusätzlichen Dämmungslage 14 zusammenliegend ausgeführt werden, wobei die EMV-Abschirmung 10 als äußerste Schicht zugleich die Funktion der - sonst vorzugsweise als Aluminiumfolie ausgeführten - metallischen Reflexionsschicht 5 übernimmt.

Alle Bestandteile der Vorrichtung 1 sind in der durch fortschreitenden Freischnitt dargestellten Schichtung zusammengelegt und gemeinsam in Anpassung an einen Einsatzfall verformt worden. Zusätzlich sind die genannten Bestandteile soweit miteinander verbunden worden, dass das angedeutete Formteil als Manschette 11 einstückig und damit leicht sowie prozesssicher händisch einbaubar ist.

### Bezugszeichenliste

- 1: Vorrichtung zur thermischen und/oder akustischen Abschirmung als existierendes Bauteil
- 2: Heizsystem
- 3: akustisches und/oder thermisches Abschirmteil
- 4: Element / Flachspule
- 5: metallische Reflexionsschicht
- 6: thermische Dämmungslage /Vlies
- 7: flächige Struktur, elektrisch isolierend
- 8: Leitbahn, elektrische Zuleitung
- 9: zweite dämmende Lage, auf dem zu erwärmenden Teil angeordnet
- 10: EMV-Abschirmung
- 11: Manschette
- 12: Rohr eines nicht weiter dargestellten Abgassystems
- 13: Naht der Manschette 11
- 14: zusätzliche Dämmungslage

- d₁,d₂,d₃: Dicken der Schichten 7, 6, 9, 14

## Patentansprüche

1. Vorrichtung (1) zur thermischen und/oder akustischen Abschirmung eines Antriebsstrangs oder eines Bestandteils (12) davon, wobei die Vorrichtung (1) mindestens eine Lage aus thermisch belastbarem Fasermaterial hoher thermischer Dämmung z.B. für Festoxid-Brennstoffzellen mit Betriebstemperaturen von 450°C bis in einen Hochtemperaturbereich mit ca. 1.000°C oder für Katalysatoren in einem Abgastrakt einer Verbrennungskraftmaschine im Bereich unterhalb von 900°C bis ca. 1.000°C umfasst und dazu ausgebildet ist, außen auf ein bestimmtes Teil (12) des Antriebsstrangs gelegt oder um das Teil herum geschlossen zu werden,
wobei mindestens ein Element (4) zum induktiven Beheizen eines Antriebsstrangs oder eines Bestandteils davon in der Vorrichtung (1) integriert oder eingebettet vorgesehen ist,
**dadurch gekennzeichnet, dass**
das mindestens eine Element (4) durch eine metallische Reflexionsschicht (5) und/oder eine ferromagnetische EMV-Abschirmung (10) auf einer dem zu beheizenden Antriebsstrang oder einem Bestandteil davon abgewandten Seite abgeschirmt ist.

2. Vorrichtung (1) nach dem vorhergehenden Anspruch, **dadurch gekennzeichnet, dass** das mindestens eine Element (4) als Flächenelement ausgebildet ist.

3. Vorrichtung (1) nach einem der vorhergehenden Ansprüche, **dadurch gekennzeichnet, dass** das mindestens eine Element (4) als flache Spule ausgebildet ist.

4. Vorrichtung (1) nach einem der vorhergehenden Ansprüche, **dadurch gekennzeichnet, dass** das mindestens eine Element (4) an dem thermischen und/oder akustischen Abschirmteil (3) so angeordnet ist, dass es in einer Einbaulage dem zu erwärmenden Antriebsstrang oder einem Bestandteil davon zugewandt angeordnet ist.

5. Vorrichtung (1) nach dem vorhergehenden Anspruch, **dadurch gekennzeichnet, dass** mindestens ein Element (4) in dem thermischen und/oder akustischen Abschirmteil (3) eingebettet angeordnet ist und aktiv elektrisch gespeist oder elektromagnetisch gekoppelt ist.

6. Vorrichtung (1) nach einem der vorhergehenden Ansprüche, **dadurch gekennzeichnet, dass** die Vorrichtung (1) eine flächige Struktur (7) oder Gewebematte umfasst, die mit Elementen (4) ausgerüstet ist, indem die Elemente (4) in und/oder auf der Gewebematte fixiert sind.

7. Vorrichtung (1) nach dem vorhergehenden Anspruch, **dadurch gekennzeichnet, dass** die Vorrichtung (1) als Matte flexibel und/oder dreidimensional verformbar ausgebildet ist, wobei für die unterschiedlichsten Temperaturbereiche angepasst Materialien vorgesehen sind, in die selber keine Wirbelströme induzierbar sind, wie z.B. Glasfaser.

8. Vorrichtung (1) nach dem vorhergehenden Anspruch, **dadurch gekennzeichnet, dass** mindestens eine Leitbahn (8) für eine definierte Stromführung zu dem mindestens einen Element (4) in das Dämmmaterial eingearbeitet ist.

9. Vorrichtung (1) nach einem der vorhergehenden Ansprüche, **dadurch gekennzeichnet, dass** die metallische Reflexionsschicht (5) und/oder eine ferromagnetische EMV-Abschirmung (10) in Form einer Metallfolie ausgeführt ist.

10. Vorrichtung (1) nach einem der vorhergehenden Ansprüche, **dadurch gekennzeichnet, dass** das Element (4) zur induktiven Erwärmung in einen Träger in Form eines elektrisch nicht leitfähigen Netzes integriert angeordnet ist.

11. Verwendung eine Vorrichtung (1) nach einem der vorstehenden Ansprüche zum starken und zielgerichteten Beheizen mindestens eines Abschnitts eines Antriebsstrang oder einem Bestandteil davon und vorzugweise eines Abgasstrangs, eines Batteriesystems, einer Brennstoffzelle oder sonstigen Teilen alternativer Antriebssysteme, für die eine Mindesttemperatur durch induktive Erwärmung einzuregeln ist.

## Claims

1. Device (1) for thermally and/or acoustically shielding of a drive train or a part thereof (12), the device (1) comprising at least one layer of thermally loadable fibre material of high thermal insulation, e.g. for solid oxide fuel cells with operating temperatures from 450°C to a high temperature range of approx. 1,000°C or for catalytic converters in an exhaust gas line of an internal combustion engine in the range below 900°C up to about 1,000°C and adapted to be placed externally on or closed around a specific part (12) of the power train, wherein at least one element (4) for inductively heating a drive train or a component thereof is integrated or embedded in the device (1),
**characterised in that**
the at least one element (4) is shielded by a metallic reflection layer (5) and/or a ferromagnetic EMC shield (10) on a side facing away from the drive train or a component thereof to be heated.

2. Device (1) according to the preceding claim, **characterized in that** the at least one element (4) is designed as a surface element.

3. Device (1) according to one of the preceding claims, **characterised in that** the at least one element (4) is designed as a flat coil.

4. Device (1) according to one of the preceding claims, **characterised in that** the at least one element (4) is arranged on the thermal and/or acoustic shielding part (3) in such a way that it is arranged in an installation position facing the drive train or a component thereof to be heated.

5. Device (1) according to the preceding claim, **characterised in that** at least one element (4) is arranged embedded in the thermal and/or acoustic shielding part (3) and is actively electrically fed or electromagnetically coupled.

6. Device (1) according to one of the preceding claims, **characterised in that** the device (1) comprises a flat structure (7) or fabric mat which is equipped with elements (4) **in that** the elements (4) are fixed in and/or on the fabric mat.

7. Device (1) according to the preceding claim, **characterised in that** the device (1) is designed as a mat which is flexible and/or three-dimensionally deformable, wherein materials are provided which are adapted for the most varied temperature ranges and in which no eddy currents can themselves be induced, such as e.g. glass fibre.

8. Device (1) according to the preceding claim, **characterised in that** at least one guide track (8) is incorporated into the insulating material for defined current guidance to the at least one element (4).

9. Device (1) according to one of the preceding claims, **characterised in that** the metallic reflection layer (5) and/or ferromagnetic EMC shielding (10) is in the form of a metal foil.

10. Device (1) according to one of the preceding claims, **characterised in that** the element (4) for inductive heating is arranged integrated in a carrier in the form of an electrically non-conductive network.

11. Use of a device (1) according to one of the preceding claims for strong and targeted heating of at least one section of a drive train or a component thereof and preferably an exhaust gas line, a battery system, a fuel cell or other parts of alternative drive systems for which a minimum temperature is to be controlled by inductive heating.

## Revendications

1. Dispositif (1) pour la protection thermique et/ou acoustique d'un groupe motopropulseur ou d'un composant de celui-ci (12) , le dispositif (1) comprenant au moins une couche de matériau fibreux thermiquement résistant à isolation thermique élevée, par exemple pour des piles à combustible à oxyde solide avec des températures de fonctionnement de 450°C jusqu'à une plage de hautes températures d'env. 1.000°C ou pour des catalyseurs dans une ligne d'échappement d'un moteur à combustion interne dans la plage inférieure à 900°C jusqu'à environ 1.000°C et est adapté pour être placé à l'extérieur sur ou fermé autour d'une certaine pièce (12) du groupe motopropulseur,
dans lequel au moins un élément (4) pour le chauffage inductif d'un groupe motopropulseur ou d'une partie de celui-ci est intégré ou noyé dans le dispositif (1),
**caractérisé en ce que**
le au moins un élément (4) est blindé par une couche de réflexion métallique (5) et/ou un blindage CEM ferromagnétique (10) sur un côté opposé à la chaîne cinématique à chauffer ou à un composant de celle-ci.

2. Dispositif (1) selon la revendication précédente, **caractérisé en ce que** le au moins un élément (4) est conçu comme un élément de surface.

3. Dispositif (1) selon l'une des revendications précédentes, **caractérisé en ce que** le au moins un élément (4) est conçu comme une bobine plate.

4. Dispositif (1) selon l'une des revendications précédentes, **caractérisé en ce que** le au moins un élément (4) est disposé sur la partie de blindage thermique et/ou acoustique (3) de telle sorte qu'il est disposé dans une position de montage faisant face à la chaîne cinématique à chauffer ou à un composant de celle-ci.

5. Dispositif (1) selon la revendication précédente, **caractérisé en ce qu'**au moins un élément (4) est encastré dans la partie de blindage thermique et/ou acoustique (3) et est activement alimenté électriquement ou couplé électromagnétiquement.

6. Dispositif (1) selon l'une des revendications précédentes, **caractérisé en ce que** le dispositif (1) comprend une structure plane (7) ou un matelas de tissu qui est équipé d'éléments (4), les éléments (4) étant fixés dans et/ou sur le matelas de tissu.

7. Dispositif (1) selon la revendication précédente, **caractérisé en ce que** le dispositif (1) est conçu comme un tapis flexible et/ou déformable en trois dimensions, des matériaux adaptés aux plages de température les plus diverses étant prévus, dans lesquels aucun courant de Foucault ne peut être induit, comme par exemple des fibres de verre.

8. Dispositif (1) selon la revendication précédente, **caractérisé en ce qu'**au moins une piste conductrice (8) pour un guidage défini du courant vers le ou les éléments (4) est intégrée dans le matériau isolant.

9. Dispositif (1) selon l'une des revendications précédentes, **caractérisé en ce que** la couche métallique de réflexion (5) et/ou le blindage CEM ferromagnétique (10) est réalisé sous la forme d'une feuille métallique.

10. Dispositif (1) selon l'une des revendications précédentes, **caractérisé en ce que** l'élément (4) pour le chauffage inductif est intégré dans un support sous la forme d'un réseau électrique non conducteur.

11. Utilisation d'un dispositif (1) selon l'une des revendications précédentes pour le chauffage puissant et ciblé d'au moins une section d'un groupe motopropulseur ou d'un composant de celui-ci, et de préférence d'une ligne d'échappement, d'un système de batterie, d'une pile à combustible ou d'autres parties de systèmes d'entraînement alternatifs, pour lesquels une température minimale doit être réglée par chauffage inductif.
